# EUROPÄISCHE PATENTANMELDUNG

(11) **EP 3 854 633 A1**
(43) Veröffentlichungstag der Anmeldung: **28.07.2021**
(21) Anmeldenummer: 21152212.3
(22) Anmeldetag: 19.01.2021
(51) Int. Cl.: B60Q 1/26, B60Q 1/28

(54) **FAHRZEUG-KAROSSERIEBAUTEIL UND VERFAHREN ZUR HERSTELLUNG EINES FAHRZEUG-KAROSSERIEBAUTEILS UND VERFAHREN ZUR STEUERUNG EINER LEUCHTMITTELANORDNUNG**

(30) Priorität: 24.01.2020 DE 202020000304 U; 28.01.2020 US 202016774148
(71) Anmelder: vosla GmbH, 08523 Plauen (DE)
(72) Erfinder: PECHER, Markus, 08280 Aue (DE); POETZSCHNER, Lutz, 08538 Weischlitz (DE); BOETTCHER, Matthias, 08258 Wohlhausen (DE); WINKLER, Markus, 97941 Tauberbischofsheim (DE)
(74) Vertreter: Isarpatent

(57) **Zusammenfassung**

Die Erfindung betrifft ein Fahrzeug-Karosseriebauteil (10), mit einer Leuchtmittelanordnung (16), welche als ein zumindest in seiner Längsrichtung biegbarer LED-Streifen ausgebildet ist, welche eine Vielzahl von nacheinander angeordneten und elektrisch verschalteten LEDs (18) aufweist; und mit einem Grundkörper (12), welcher zur Aufnahme der Leuchtmittelanordnung (16) an einer Lichtaustrittsseite (13) ausgebildet ist. Außerdem betrifft die Erfindung ein Verfahren zur Herstellung eines Karosseriebauteils (10) und ein Verfahren zur Steuerung einer Leuchtmittelanordnung (16) an einem Fahrzeug.

## Beschreibung

### GEBIET DER ERFINDUNG

Die vorliegende Erfindung betrifft ein Fahrzeug-Karosseriebauteil und Verfahren zu dessen Herstellung und zu einer Steuerung einer Leuchtmittelanordnung an einem Fahrzeug.

### TECHNISCHER HINTERGRUND

LED-Streifen oder LED-Bänder, bei denen nacheinander LEDs angeordnet sind, sind allgemein bekannt. Diese LED Streifen können aufgrund ihrer flachen Dimensionen, ihrer lediglich im Niedervolt-Bereich benötigten Spannung, ihrer vielseitigen farblichen Abstrahlmöglichkeiten und ihrem geringen Energieverbrauch flexibel eingesetzt werden. Beispielhaft für einen LED-Streifen sei hier die EP 2 993 384 A1 erwähnt. Neuerdings werden LEDs als neues Beleuchtungsmittel auch für den Einsatz im Automobilbereich berücksichtigt.

### ZUSAMMENFASSUNG DER ERFINDUNG

Vor diesem Hintergrund liegt der vorliegenden Erfindung die Aufgabe zugrunde, eine verbesserte Beleuchtung für ein Fahrzeug anzugeben.

Erfindungsgemäß wird diese Aufgabe durch ein Fahrzeug-Karosseriebauteil mit den Merkmalen des Patentanspruchs 1 und/oder durch Verfahren mit den Merkmalen der Patentansprüche 13 und 15 gelöst.

Demgemäß ist vorgesehen:
- Fahrzeug-Karosseriebauteil, mit einer Leuchtmittelanordnung, welche als ein zumindest in seiner Längsrichtung biegbarer LED-Streifen ausgebildet ist, welche eine Vielzahl von nacheinander angeordneten und elektrisch verschalteten LEDs aufweist; und mit einem Grundkörper, welcher zur Aufnahme der Leuchtmittelanordnung an einer Lichtaustrittsseite ausgebildet ist.
- Ein Verfahren zur Herstellung eines Fahrzeug-Karosseriebauteils, insbesondere eines erfindungsgemäßen Fahrzeug-Karosseriebauteils, mit den Schritten: Bereitstellen eines Grundkörpers, welcher an einer Lichtaustrittsseite zur Aufnahme der Leuchtmittelanordnung ausgebildet ist; Befestigen einer als ein zumindest in seiner Längsrichtung biegbarer LED-Streifen ausgebildeten Leuchtmittelanordnung, welche eine Vielzahl von nacheinander angeordneten und elektrisch verschalteten LEDs aufweist, an den Grundkörper.
- Ein Verfahren zur Steuerung einer Leuchtmittelanordnung an einem Fahrzeug, welches insbesondere ein erfindungsgemäßes Fahrzeug-Karosseriebauteil aufweist, mit den Schritten: Bereitstellen einer Steuereinrichtung zum Steuern einer Vielzahl von nacheinander angeordneten und elektrisch verschalteten LEDs an einem Grundkörper eines Fahrzeug-Karosseriebauteils angeordneten und als ein zumindest in seiner Längsrichtung biegbarer LED-Streifen ausgebildeten Leuchtmittelanordnung; und Ein- und Ausschalten oder Modulieren einer Strahlungsleistung, der einzelnen LEDs gemäß einem vorbestimmten Muster.

Die der vorliegenden Erfindung zugrunde liegende Erkenntnis besteht darin, dass ein in ein Fahrzeug-Karosserieteil eingebauter, oder integral mit ihm verbundener LED-Streifen auf einen Benutzer aufgrund seiner natürlich wirkt, und damit als ein modernes Beleuchtungsmittel für ein Fahrzeug besonders geeignet ist.

Die der vorliegenden Erfindung zugrunde liegende Idee besteht darin, den LED-Streifen an einen Grundkörper des Fahrzeug-Karosseriebauteils zu befestigen. Der Grundkörper ist derart ausgestaltet, dass der LED-Streifen von dem Grundkörper vorzugsweise bündig aufgenommen wird. Die biegbare Eigenschaft des LED-Streifens ermöglicht dabei eine vielseitige Verwendung an unterschiedlichen Grundkörpern moderner Karosseriebauteile.

Der LED-Streifen enthält eine Vielzahl von nacheinander angeordneten, in Reihe oder parallel verschalteter LEDs (Leuchtdioden), die für gewöhnlich als LED-Halbleiterchips, aber auch beispielsweise als OLED (organische Leuchtdiode) ausgebildet sein können. Damit kann ein Abstrahlen über einen großen Raumwinkel auf einer Lichtaustrittsseite erreicht werden.

So werden die vorzugsweise als LED-chips ausgebildeten LEDs enthaltende auf dem LED-Streifen in der Regel derart verschalet, das sie für einen Betrieb lediglich eine Gleichspannung im Niedervolt-Bereich benötigen. Bevorzugt wird die Schaltung auf die Betriebsspannung der Energiequelle des Fahrzeugs ausgelegt, was in einem gewöhnlichen Fahrzeug die Spannung der Autobatterie, in der Regel 12 Volt, ist.

Vorteilhafte Ausgestaltungen und Weiterbildungen ergeben sich aus den weiteren Unteransprüchen sowie aus der Beschreibung unter Bezugnahme auf die Figuren der Zeichnung.

In einer bevorzugten Weiterbildung der Erfindung umfasst das Fahrzeug-Karosseriebauteil eine Montageeinrichtung, welche zum Fixieren der Leuchtmittelanordnung ausgelegt ist. Auf diese Weise kann ein Lösen des LED-Streifens von dem Fahrzeug-Karosseriebauteil durch ein stabiles Befestigen an eine an das Fahrzeug-Karosseriebauteil bzw. den Grundkörper angebrachten oder mit dem Grundkörper integral verbundenen Montageeinrichtung verhindert werden. Eine Befestigung über eine solche Montageeinrichtung hat den Vorteil, dass der LED-Streifen über einen langen Zeitraum an der befestigten Stelle verharrt ohne sich über einen Teilabschnitt oder ganz von dem Karosseriebauteil zu lösen. Somit wird eine Langzeitbenutzung sichergestellt.

In einer weiteren bevorzugten Weiterbildung der Erfindung weist der Grundkörper an der Lichtaustrittsseite zumindest eine Vertiefung zur Aufnahme der Leuchtmittelanordnung auf. Der LED-Streifen wird in die Vertiefung des Karosseriebauteils mittels einer Montageeinrichtung, welche in der Vertiefung angeordnet ist, an das Karosseriebauteil befestigt oder integriert. Auf diese Weise ist die Leuchtmittelanordnung besser vor Umwelteinflüssen geschützt. Außerdem kann die Tiefe der Vertiefung dazu ausgelegt werden, den Raumwinkel des abgestrahlten Lichts zu begrenzen.

In einer weiteren bevorzugten Weiterbildung der Erfindung umfasst das Fahrzeug-Karosseriebauteil eine Abdeckung zum Abdecken der Vertiefung an der Lichtaustrittsseite. Dabei weist die Abdeckung mindestens einen zumindest teil-transparenten Abschnitt auf, durch welchen zumindest ein Teil des von den LEDs erzeugten Lichts nach außen abstrahlbar ist. Zur weiteren Anpassung der Leuchteigenschaften und zum Schutz des LED-Streifens vor Umwelteinflüssen ist eine Abdeckung über die Vertiefung vorgesehen, durch welche zumindest ein Teil des erzeugten Lichts durch mindestens einen transparenten, teil-transparenten oder transluzenten Abschnitt der Abdeckung nach außen abstrahlbar ist. Zur Begrenzung des Raumwinkels des abgestrahlten Lichts kann auch ein lichtundurchlässiger, d.h. opaker Abschnitt vorgesehen sein.

In einer bevorzugten Weiterbildung der Erfindung weist die Leuchtmittelanordnung ein Substrat und eine zumindest teil-transparente Außenschicht aufweist. Die LEDs sind hierbei zwischen dem Substrat und der Außenschicht angeordnet. Bei dem Substrat handelt es sich vorzugsweise um Silizium, oder einem auf Silizium basierenden, oder einem sonstigen Halbleiter. Zusätzlich kann eine weitere Substratschicht, beispielsweise ein härteres Substrat, oder eine Grundplatte aus Metall vorgesehen sein, welche den LED-Streifen mechanisch robust ausbildet. Zwischen den Schichten kann eine Isolationsschicht vorgesehen sein.

Die Außenschicht schützt die LEDs vor Umwelteinflüssen. Die Außenschicht ist dabei vorzugsweise transparent, teil-transparent oder transluzent ausgebildet, damit zumindest ein Teil des von den LEDs erzeugten Lichts nach Außen und in einen bis zu 4π großen Raumwinkel abgestrahlbar ist. Die Außenschicht kann dabei vorzugsweise elastisch ausgebildet sein, indem die Außenschicht ein elastisches Material wie beispielsweise einen weichen Kunststoff enthält. Dadurch werden die LEDs besser vor mechanischen Stößen geschützt.

In einer weiteren bevorzugten Weiterbildung der Erfindung ist die Leuchtmittelanordnung in alle Raumrichtungen biegbar ausgebildet. Eine solche mechanische Flexibilität erhöht die Anwendbarkeit der Leuchtmittelanordnung, indem die Leuchtmittelanordnung auch spiralförmig oder in einer sonstigen 3D-Anordnung geformt werden kann. Dies kann beispielsweise bei einer Integration in einen über eine zweidimensionale Gitterstruktur hinausgehenden Kühlergrill, oder in strömungstechnisch in drei Dimensionen optimierte Karosseriebauteile der Verkleidung, wie beispielsweise einer Stoßstange, einem Kotflügel oder einer Seitenwand, der Fall sein.

In einer weiteren bevorzugten Weiterbildung der Erfindung sind die LEDs als weiß oder einfarbig leuchtende LEDs oder als RGB-LEDs ausgebildet. Diese Weiterbildung ermöglicht je nach gewünschtem visuellem Effekt eine vielseitige farbliche Ausgestaltung der Leuchtmittelanordnung. Dies kann zum einen für ein verbessertes Design genutzt werden, um ein Benutzererlebnis des Fahrers oder Besitzers des Fahrzeugs zu verbessern. Zum anderen kann die farbliche Ausgestaltung auch für eine Funktion, wie beispielsweise einer Anzeige genutzt werden. So kann beispielsweise der Ladezustand einer Batterie eines Elektroautos über die Farben der LEDs angezeigt werden.

In einer weiteren bevorzugten Weiterbildung der Erfindung sind die LEDs ausschließlich auf einer Vorderseite der Leuchtmittelanordnung angeordnet. Die "Vorderseite" der Leuchtmittelanordnung ist dabei als die Seite der Leuchtmittelanordnung definiert, welche nach der Montage in dem Grundkörper hin zur Abdeckung bzw. zur Lichtaustrittsseite des Fahrzeug-Karosseriebauteils weist. Das ermöglicht eine unkomplizierte Integration in den Grundkörper des Karosseriebauteils, indem vorzugsweise die Rückseite oder die Ränder der Leuchtmittelanordnung für die Montage genutzt wird. Allgemein können die LEDs beliebig auf dem Substrat angeordnet sein, was die Herstellung der Leuchtmittelanordnung schon durch größere Positioniertoleranzen erleichtert.

In einer weiteren bevorzugten Weiterbildung der Erfindung sind mindestens zwei Kontaktanschlüsse zur elektrischen Kontaktierung der LEDs auf der Vorderseite der Leuchtmittelanordnung angeordnet. So können elektrische Leitungen an ein Ende der Leuchtmittelanordnung gelegt werden, welche in der Regel leichter zugänglich sind. Dadurch wird die Kontaktierung der Leuchtmittelanordnung erleichtert.

In einer weiteren bevorzugten Weiterbildung der Erfindung sind die jeweiligen Kontaktanschlüsse an einem gegenüberliegenden oder gleichen Ende der Leuchtmittelanordnung angeordnet. So können die elektrischen Leitungen von den Kontaktanschlüssen direkt zu einer Energiequelle geführt werden. Auf diese Weise wird die Auslegung der elektrischen Leitungen weiter vereinfacht.

In einer weiteren bevorzugten Weiterbildung der Erfindung weist die Leuchtmittelanordnung zumindest drei LEDs auf, welche in gleichen Abständen hintereinander auf dem LED-Streifen angeordnet sind. Das umfasst auch Anordnungen mit mehr als drei LEDs, in welchen alle LEDs der Leuchtmittelanordnung in gleichen Abständen hintereinander angeordnet sind. Auch können die LEDs in Gruppen von gleichen, aber von Gruppe zu Gruppe verschiedenen Abständen hintereinander angeordnet sein. Mit solchen Anordnungen kann in Verbindung mit der Abdeckung eine nach außen wirkende homogene Beleuchtung erreicht werden.

In einer weiteren bevorzugten Weiterbildung der Erfindung weist die Leuchtmittelanordnung einen lichtempfindlichen Sensor, eine Zenerdiode oder einen Temperatursensor auf. Mit einem der genannten zusätzlichen Bauelemente kann die Funktion der Leuchtmittelanordnung besser gewährleistet und sogar erweitert werden. So kann ein Temperatursensor mit entsprechender Schaltung ermöglichen, dass die LEDs bei einer überhöhten Temperatur aus Sicherheitsgründen automatisch ausgeschaltet werden. Eine antiparallel zu den LEDs geschaltete Zenerdiode kann bewirken, dass bei einem Ausfall einer LED die Funktionsweise einer LED-Reihenschaltung mit den übrigen LEDs aufrechterhalten wird. Ein lichtempfindlicher Sensor ermöglicht beispielsweise ein automatisches Ein-/oder Ausschalten der LEDs gemäß eines Umgebungslichtes.

In einer weiteren bevorzugten Weiterbildung der Erfindung ist eine Steuereinrichtung zur Steuerung der LEDs vorgesehen, die derart mit den LEDs gekoppelt ist, dass die LEDs unabhängig voneinander ein- und ausschaltbar sind. Somit ermöglicht die Steuereinrichtung ein individuelles Ansteuern der LEDs, was für weitere visuelle Effekte genutzt werden kann. So können die LEDs beispielsweise gemäß einem zeitlichen Muster ein- und ausgeschaltet werden, was gezielt zu einer Verbesserung des Benutzererlebnisses, aber auch zur Anzeige einer Signalfunktion oder Warnfunktion, genutzt werden kann. Ähnlich wie ein modernes Blinklicht kann mit einem zeitlich hintereinander ausgeführtem Einschalten der auf dem LED-Streifen nacheinander oder hintereinander angeordneten LEDs eine Richtung anzeigten werden. Beliebige Betriebsmodi, hier auch Muster genannt, des Ein- und Ausschalten der LEDs sind dabei denkbar. Auch eine Verwendung zu Kommunikationszwecken ist möglich, bei welcher die LEDs gemäß eines Codes ein- und ausgeschaltet werden. So können Codes, wie beispielsweise Fehlercodes, leicht übermittelt werden, welche über einen Zustand von Komponenten des Fahrzeugs, wie beispielsweise einer Batterie in einem Elektrofahrzeug, Auskunft geben. Kombinationen der oben stehenden Funktionen sind ebenfalls denkbar.

In einer weiteren bevorzugten Weiterbildung ist eine Strahlungsleistung der LEDs durch die Steuereinrichtung unabhängig voneinander steuerbar. Damit wird eine weitere Funktionsfähigkeit des LED-Streifens bereitgestellt, die ähnlich der vorherigen Weiterbildung vielseitig genutzt werden kann. So können Änderungen der Strahlungsleistung der einzelnen LEDs für ein visuell ansprechenderes Design und damit ein gesteigertes Benutzererlebnis genutzt werden. Durch zeitliche Änderungen der Strahlungsleistung, insbesondere einer stufenlosen Änderung der Strahlungsleistung, wie beispielsweise einer "langsam" durchgeführten Abschwächung oder Verstärkung der Strahlungsleistung kann eine sonst nur in Stufen erfolgte und damit "abgehackte" wirkende Änderung der Beleuchtung vermieden werden. Selbstverständlich können Änderungen der Strahlungsleistung analog auch für Warn- oder Anzeigefunktionen genutzt werden.

In einer weiteren bevorzugten Weiterbildung der Erfindung ist die Leuchtmittelanordnung an der Montageeinrichtung integral fixiert. Mit dieser Weiterbildung ist die Befestigung der Leuchtmittelanordnung an den Grundkörper für eine Langzeitnutzung ausgelegt. Eine integrale Aufnahme in die Montageeinrichtung bietet dabei eine auf Sicherheit ausgelegte Befestigungsmöglichkeit.

In einer weiteren bevorzugten Weiterbildung der Erfindung sind der Grundkörper und die Abdeckung einteilig oder einstückig ausgebildet. Solch eine Ausbildung ist in der Herstellung, beispielsweise durch ein Spritzgießen, bei der die Leuchtmittelanordnung bereits in das Bauteil bei der Herstellung integriert ist, mit weniger Aufwand und damit weniger Kosten verbunden.

In einer weiteren bevorzugten Weiterbildung der Erfindung ist die Leuchtmittelanordnung an der Montageeinrichtung als separates Bauteil fixiert. Das erlaubt ein einfaches Austauschen der Leuchtmittelanordnung, was beispielsweise aufgrund eines Defekts der Leuchtmittelanordnung notwendig werden kann. Trotzdem kann die Befestigung der Leuchtmittelanordnung an den Grundkörper auf eine Langzeitnutzung ausgelegt sein.

In einer weiteren bevorzugten Weiterbildung der Erfindung ist eine äußere Oberfläche der Abdeckung an der Lichtaustrittsseite bündig zu einer die Vertiefung umgebenden Oberfläche des Grundkörpers ausgebildet. Somit entsteht eine glatte Oberfläche ohne Kanten oder Stufen zwischen den jeweiligen Oberflächen des Grundkörpers und der Abdeckung. Damit wird zum einen eine besonders natürlich aussehende Beleuchtung erreicht. Zum anderen ist auf diese Weise bei nicht eingeschalteter Beleuchtung die integrierte Leuchtmittelanordnung nicht oder nur schwer erkennbar. So wirkt das Fahrzeug-Karosseriebauteil auch bei nicht eingeschalteter Beleuchtung natürlich.

In einer weiteren bevorzugten Weiterbildung der Erfindung ist die Leuchtmittelanordnung an der Montageeinrichtung durch zumindest einer der folgenden Möglichkeiten fixiert: Extrudieren, Spritzgießen, Verkleben, Verrasten, Clipsen, Einkedern, Verklemmen. Mit dieser Weiterbildung ist die Befestigung der Leuchtmittelanordnung an den Grundkörper für eine Langzeitnutzung ausgelegt. Diese Befestigungsmöglichkeiten der Leuchtmittelanordnung an die Montageeinrichtung bieten auch dabei eine sichere Befestigung. Insbesondere ermöglichen das Verrasten, Clipsen, Einkedern und das Verklemmen einen Austausch der Leuchtmittelanordnung auf einfache Weise.

In einer weiteren bevorzugten Weiterbildung der Erfindung weist der mindestens eine zumindest teil-transparente Abschnitt der Abdeckung eine Transmission eines vorbestimmten spektralen Bereichs oder einer vorbestimmten Farbe auf. Die spektral selektive Ausbildung, bevorzugt gemäß einer Farbe, des zumindest teil-transparenten Abschnitts der Abdeckung kann im Vergleich zu einer Ausbildung der LEDs gemäß einer gewünschten spektralen Eigenschaft einen Kostenvorteil haben. Auch kann verhindert werden, dass Licht eines bestimmten Bereichs des Spektrums nach außen entweichen kann, was sicherheitstechnisch von Vorteil sein kann.

In einer weiteren bevorzugten Weiterbildung der Erfindung ist der mindestens eine zumindest teil-transparente Abschnitt der Abdeckung als eine Linse ausgebildet. Somit werden weitere optische Effekte wie eine Strahlbündelung oder Aufweitung, eine selektive Ausstrahlung in einem vorbestimmten Raumwinkel oder ähnliches ermöglicht, welche für ein gesteigertes Benutzererlebnis, für eine Warnfunktion oder Anzeigefunktion genutzt werden können.

In einer weiteren bevorzugten Weiterbildung der Erfindung ist das Fahrzeug-Karosseriebauteil als Kühlergrill ausgebildet. Außerdem ist die Leuchtmittelanordnung an einer Rippe eines Gitters des Kühlergrills, oder an zumindest einer Seitenwand des Kühlergrills befestigt. Mit der Vertiefung und der damit verbundenen Integration der Leuchtmittelanordnung in eine Rippe des Kühlergrills kann eine von außen besonders gut sichtbare Beleuchtung erreicht werden. Mit einer Anbringung der Leuchtmittelanordnung in eine Vertiefung, welche an einer Seitenwand des Kühlergrills ausgebildet ist, kann eine besonders effektive Ausleuchtung der Kühlergrillstruktur erreicht werden.

Mit "von außen betrachtet" ist hier eine Betrachtung von einem Standort gemeint, den ein Betrachter einnimmt, wenn er sich vor, hinter, oder neben dem Fahrzeug befindet, so dass er einen ungehinderten Blick auf das Karosseriebauteil hat.

In einer weiteren bevorzugten Weiterbildung der Erfindung ist ein Befestigens einer Abdeckung zum Abdecken einer zur Aufnahme der Leuchtmittelvorrichtung vorgesehenen Vertiefung des Grundkörpers vorgesehen, wobei die Abdeckung mindestens einen zumindest teil-transparenten Abschnitt aufweist.

Die obigen Ausgestaltungen und Weiterbildungen lassen sich, sofern sinnvoll, beliebig miteinander kombinieren. Insbesondere sind sämtliche Merkmale des Karosseriebauteils auf das Verfahren zur Herstellung des Karosseriebauteils und zur Steuerung einer Leuchtmittelanordnung eines Fahrzeugs übertragbar. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine schematische Querschnittsdarstellung eines Ausschnitts einer Ausführungsform eines Fahrzeug-Karosseriebauteils;
- Fig. 2: eine schematische Querschnittsdarstellung eines Ausschnitts einer Ausführungsform eines Fahrzeug-Karosseriebauteils;
- Fig. 3: eine schematische Draufsicht eines Ausschnitts einer Ausführungsform eines Fahrzeug-Karosseriebauteils;
- Fig. 4: eine schematische Querschnittsdarstellung gemäß dem Schnitt III der Ausführungsform eines Fahrzeug-Karosseriebauteils aus Fig. 3;
- Fig. 5: eine schematische Draufsicht einer Ausführungsform einer Leuchtmittelanordnung eines Fahrzeug-Karosseriebauteils;
- Fig. 6: eine schematische Draufsicht einer weiteren Ausführungsform einer Leuchtmittelanordnung eines Fahrzeug-Karosseriebauteils;
- Fig. 7: eine schematische Draufsicht einer weiteren Ausführungsform einer Leuchtmittelanordnung eines Fahrzeug-Karosseriebauteils;
- Fig. 8: eine schematische Draufsicht einer weiteren Ausführungsform einer Leuchtmittelanordnung eines Karosseriebauteils und dessen Betriebs;
- Fig. 9: eine schematische Draufsicht einer weiteren Ausführungsform eines Betriebs einer Leuchtmittelanordnung;
- Fig. 10: eine schematische Draufsicht einer weiteren Ausführungsform eines Betriebs einer Leuchtmittelanordnung;
- Fig. 11: eine schematische Darstellung einer Ausführungsform eines Fahrzeug-Karosseriebauteils.
- Fig. 12: eine schematische Darstellung einer Ausführungsform eines Verfahrens zur Herstellung eines FahrzeugKarosseriebauteils;
- Fig. 13: eine schematische Darstellung einer Ausführungsform eines Verfahrens zur Steuerung einer Leuchtmittelanordnung eines Fahrzeug-Karosseriebauteils.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnungen sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

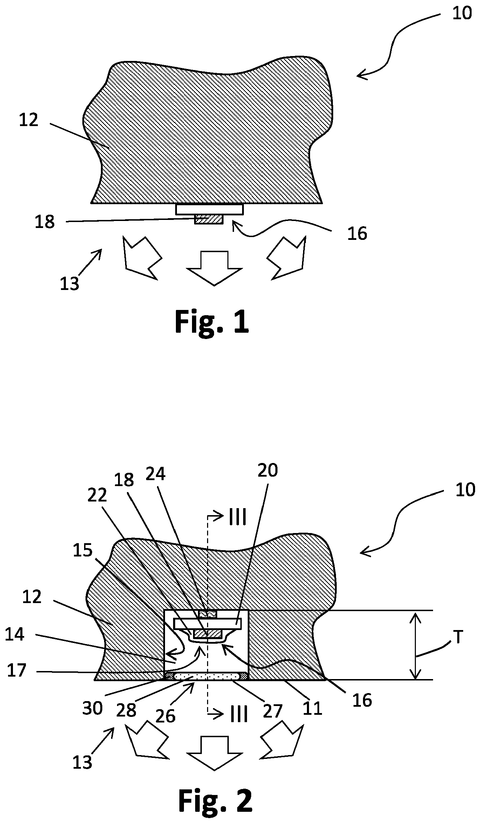

Fig. 1 ist eine schematische Querschnittsdarstellung einer Ausführungsform eines Ausschnitts eines Fahrzeug-Karosseriebauteils.

Der Fig. 1 gezeigte Ausschnitt eines Fahrzeug-Karosseriebauteils 10, welches insbesondere ein Kühlergrill oder eine Stoßstangenleiste eines Fahrzeugs ist, enthält einen Grundkörper 12 zur Aufnahme der Leuchtmittelanordnung 16 ausgebildet ist. An der Oberfläche des Grundkörpers 12 ist eine Leuchtmittelanordnung 16 befestigt, welche als ein zumindest in seiner Längsrichtung biegbarer LED-Streifen ausgebildet ist. Aufgrund der Biegbarkeit in zumindest der Längsrichtung kann der LED-Streifen flexibel eingesetzt werden. Der LED-Streifen weist dabei eine Vielzahl von nacheinander angeordneten und elektrisch verschalteten LEDs 18 auf. Damit kann eine Abstrahlung über einen großen Raumwinkel auf der Lichtaustrittsseite 13 erreicht werden.

Fig. 2 ist eine schematische Querschnittsdarstellung einer Ausführungsform eines Ausschnitts eines Fahrzeug-Karosseriebauteils.

Der Fig. 2 gezeigte Ausschnitt eines Fahrzeug-Karosseriebauteils 10 enthält einen Grundkörper 12, welcher an der Lichtaustrittsseite 13 zumindest eine Ausnehmung oder Vertiefung 14 zur Aufnahme einer Leuchtmittelanordnung 16 aufweist. Die Tiefe T und die Länge der Vertiefung 14 sind dabei bevorzugt an die Dimensionen der Leuchtmittelanordnung 16 als auch nach den Abstrahlungseigenschaften der Leuchtmittelanordnung 16 angepasst.

Die Leuchtmittelanordnung 16 ist dabei als ein zumindest in seiner Längsrichtung biegbarer LED-Streifen ausgebildet. Der LED-Streifen enthält eine Vielzahl von nacheinander oder hintereinander angeordneten und elektrisch miteinander verschalteten LEDs 18.

Wie in Fig. 1 und Fig. 2 gezeigt, sind die LEDs 18 dabei vorzugsweise auf einer Vorderseite 17 der Leuchtmittelanordnung 16 angeordnet. Die "Vorderseite 17" der Leuchtmittelanordnung 16 ist dabei als die Seite der Leuchtmittelanordnung 16 definiert, welche nach der Montage in dem Grundkörper 12 hin zur Lichtaustrittsseite 13 bzw. einer Abdeckung 26 des Fahrzeug-Karosseriebauteils 10 weist. Auf diese Weise wird eine unkomplizierte Integration an oder in den Grundkörper des Karosseriebauteils ermöglicht, bei der vorzugsweise die Rückseite oder die Ränder der Leuchtmittelanordnung 16 für die Montage genutzt wird. Damit kann das abgestrahlte Licht durch die Montage praktisch nicht blockiert werden. Außerdem erleichtert eine einseitige Anordnung der LEDs 18 auf der Leuchtmittelanordnung 16 den Herstellungsprozess erheblich.

Der LED-Streifen weist dabei zumindest ein Substrat 20 auf, welches in der Regel Silizium, oder einen auf Silizium basierenden, oder sonstigen Halbleiter enthalten kann. Zusätzlich kann eine weitere Substratschicht, beispielsweise ein härteres Substrat oder eine Grundplatte aus Metall vorgesehen sein, welche den LED-Streifen mechanisch robust ausbildet. Zwischen den beiden Schichten kann eine Isolationsschicht vorgesehen sein.

Außerdem weist das Karosserieteil 10 eine Montageeinrichtung 24 auf, welche in der Vertiefung 14 des Grundkörpers 12 angeordnet ist. Dabei ist die Montageeinrichtung 24 zum Fixieren der Leuchtmittelanordnung 16 ausgelegt. Somit kann die Befestigung der Leuchtmittelanordnung 16 an dem Grundkörper 12 für eine Langzeitnutzung ausgelegt werden. Das Fixieren der Leuchtmittelanordnung 16 kann dabei auf unterschiedliche Weise ausgestaltet sein. So kann die Leuchtmittelanordnung 16 an der Montageeinrichtung 24 integral fixiert oder verbunden sein. Eine integrale Befestigung in die Montageeinrichtung 24 bietet damit eine auf Sicherheit ausgelegte Befestigungsmöglichkeit. Alternativ kann die Montageeinrichtung 24 als separates Bauteil ausgebildet sein. Die Leuchtmittelanordnung 16 kann durch zumindest einer der folgenden Möglichkeiten an der Montageeinrichtung 24 fixiert sein: Extrudieren, Spritzgießen, Verkleben, Verrasten, Clipsen, Einkedern oder Verklemmen. Kombinationen dieser Mittel ist ebenso möglich. Somit kann eine sichere Befestigung realisiert werden, welche zusätzlich noch einen Austausch der Leuchtmittelanordnung auf einfache Weise zulassen kann.

Des Weiteren weist das Karosseriebauteil 10 die Abdeckung 26 auf, welche zum Abdecken der Vertiefung 14 ausgelegt ist. Die Abdeckung 26 enthält dabei mindestens einen Abschnitt 28, welcher transparent, teil-transparent oder transluzent ausgebildet ist, so dass zumindest ein Teil des von den LEDs 18 erzeugten Lichts nach außen abstrahlbar ist. Auch kann die Abdeckung, wie in Fig. 1 gezeigt, einen nichttransparent, d.h. opaken Abschnitt 30 enthalten. So ist in der vorliegenden Ausführungsform der zumindest teil-transparente Bereich zentrisch auf der Abdeckung 26 angeordnet, wobei der opake Abschnitt 30 den äußeren Rand der Abdeckung 26 bildet. Es ist aber auch vorstellbar, dass durch entsprechendes Design der Abschnitte 28 und 30 das Licht in vorbestimmten Zeichen oder Symbolen abgestrahlt wird. Zusätzlich kann die Abdeckung 26 derart ausgestaltet sein, dass der mindestens eine zumindest teil-transparente Abschnitt 28 der Abdeckung 26 eine Transmission eines vorbestimmten spektralen Bereichs oder einer vorbestimmten Farbe aufweist. Die spektral selektive Ausbildung, bevorzugt gemäß einer Farbe, des zumindest teil-transparenten Abschnitts 28 der Abdeckung 26 kann im Vergleich zu einer Ausbildung der LEDs 18 gemäß einer gewünschten spektralen Eigenschaft einen Kostenvorteil haben. Auch kann verhindert werden, dass Licht eines bestimmten Bereichs des Spektrums nach außen entweichen kann, was sicherheitstechnisch von Vorteil sein kann.

Vorzugsweise sind der Grundkörper 12 und die Abdeckung 26 einteilig oder einstückig ausgebildet. In solch einem Fall kann die Leuchtmittelanordnung 16 bereits bei der Herstellung in den Grundkörper integriert werden. Damit wird die Herstellung, beispielsweise mittels eines Spritzgießens vereinfacht, womit Kosten eingespart werden können. Des Weiteren kann eine äußere Oberfläche 27 der Abdeckung 26 an der Lichtaustrittsseite 13 bündig zu einer die Vertiefung 14 umgebenden Oberfläche 11 des Grundkörpers 12 ausgebildet sein. Somit entsteht eine glatte Oberfläche ohne Kanten oder Stufen zwischen den jeweiligen Oberflächen 11, 27 des Grundkörpers 12 und der Abdeckung 14. Damit wird zum einen eine besonders natürlich aussehende Beleuchtung erreicht. Zum anderen ist auf diese Weise bei nicht eingeschalteter Beleuchtung die integrierte Leuchtmittelanordnung nicht oder nur schwer erkennbar. So wirkt das Fahrzeug-Karosseriebauteil auch bei nicht eingeschalteter Beleuchtung natürlich.

Außerdem weist die Leuchtmittelanordnung 16 eine zumindest teil-transparente Außenschicht 22 auf, wobei die LEDs 18 zwischen dem Substrat 20 und der Außenschicht 22 angeordnet sind. Die Außenschicht 22 ist dabei transparent, teil-transparent oder transluzent ausgebildet, damit zumindest ein Teil des von den LEDs erzeugten Lichts nach Außen und in einen bis zu 4π großen Raumwinkel abstrahlbar ist. Die Außenschicht ist dabei vorzugsweise elastisch ausgebildet, indem die Außenschicht 22 ein elastisches Material wie beispielsweise einen weichen Kunststoff enthält. Dadurch werden die LEDs 18 besser vor mechanischen Stößen geschützt. Außerdem schützt die Außenschicht 22 die LEDs 18 vor Umwelteinflüssen. Diese kann sich über die gesamte Fläche des Substrats 20 erstrecken, oder, wie in Fig. 1 gezeigt, nur über einen Teil des Querschnitts der Leuchtmittelanordnung 16 davon. Auch kann die Außenschicht 22 unterbrochen sein, so dass nur die LEDs 18 und optional Leiterbahnen, welche die LEDs 18 miteinander gemäß einer Schaltung verbindet (nicht gezeigt), bedeckt werden.

Als zusätzlichen Aspekt erlaubt die Ausgestaltung der Vertiefung 14 bezüglich ihrer Länge L und insbesondere ihrer Tiefe T, das von den LEDs 18 erzeugten und abgestrahlte Licht an der Lichtaustrittsseite 13 gemäß gewünschten, nach außen wirkenden Leuchteigenschaften anzupassen. Da die LEDs 18 für gewöhnlich über einen relativ großen Raumwinkel abstrahlen, kann beispielsweise mit einer Erhöhung der Tiefe T der Vertiefung 14 der Abstrahlungswinkel des Lichts eingeschränkt werden. Der Raumwinkel kann weiter verkleinert werden, indem die Wände 15 der Vertiefung 14 lichtabsorbierend gestaltet werden. Umgekehrt vergrößern eine geringe Tiefe T der Vertiefung 14 und reflektierende Wände 15 der Vertiefung 14 den Raumwinkel des abgestrahlten Lichts.

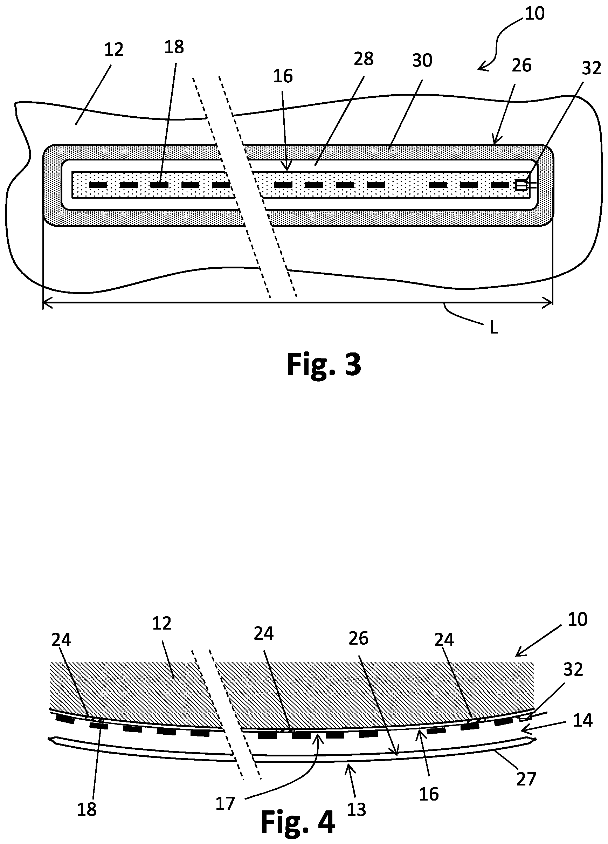

Fig. 3 ist eine schematische Draufsicht eines Ausschnitts einer Ausführungsform eines Fahrzeug-Karosseriebauteils.

Die in Fig. 3 dargestellte Leuchtmittelanordnung 16 besitzt eine Länge L, welche sich bevorzugt nach der Dimension der Vertiefung 14 des Grundkörpers 12 richtet. Die Leuchtmittelanordnung 16 weist zumindest drei LEDs 18 auf, welche in gleichen Abständen hintereinander auf dem LED-Streifen angeordnet sind. Außerdem können die LEDs 18 in Gruppen von drei, vier, fünf oder mehr LEDs 18 in gleichen Abständen hintereinander angeordnet sein, wie in Fig. 3 gezeigt ist. Denkbar sind auch Anordnungen von Gruppen von 18 in verschiedenen Abständen hintereinander angeordneten LEDs 18. Mit solchen Anordnungen können in Verbindung mit der Abdeckung eine nach außen wirkende homogene Beleuchtung erreicht werden. Allgemein können die LEDs 18 praktisch beliebig auf den dem Substrat 20 angeordnet sein, was die Herstellung insbesondere im Hinblick auf Fertigungstoleranzen erleichtert.

Weiterhin in Fig. 3 zu erkennen ist, dass bevorzugt mindestens zwei Kontaktanschlüsse 32 zur elektrischen Kontaktierung der LEDs 18 auf der Vorderseite 17 der Leuchtmittelanordnung 16 angeordnet sind. Dabei sind die Kontaktanschlüsse 32 vorzugsweise, und wie in Fig. 3 gezeigt, an einem Ende der Leuchtmittelanordnung 16 angeordnet. So können elektrische Leitungen an eines der Enden der Leuchtmittelanordnung 16 gelegt werden, welche in der Regel leichter zugänglich sind. Dadurch wird die Kontaktierung der Leuchtmittelanordnung 16 und deren Herstellung erleichtert.

Zu erkennen ist außerdem, dass der zumindest teil-transparente Abschnitt 28 der Abdeckung 26 vollständig von dem opaken Abschnitt 30 umgeben ist. Damit wird der Raumwinkel des abgestrahlten Lichts begrenzt. Zusätzlich kann der Raumwinkel dadurch beschränkt oder auch vergrößert werden, indem der mindestens eine zumindest teil-transparente Abschnitt 28 der Abdeckung 26 als ein optisches Element, beispielsweise einer Linse, ausgebildet ist. Dabei ist die Art und Form der Linse nicht beschränkt und kann u.a. konvexe Linsen, konkave Linsen, konvex-konkav Linsen, Miniskuslinsen, Axicone, und insbesondere, spezielle für die Ausführungsform der Fig. 3 geeignete Zylinderlinsen der genannten Formen umfassen, sind aber auf diese nicht beschränkt. Auch kann die Linse als eine Linse mit veränderbarem Fokus ausgebildet sein, welcher gemäß einem Signal von einem beispielsweise weiter unten beschriebenen Sensor seine optischen Eigenschaften, wie beispielsweise seiner Brennweite, ändert oder anpasst.

Fig. 4 ist eine schematische Querschnittsdarstellung gemäß dem Schnitt III der Ausführungsform eines Ausschnitts eines Karosseriebauteils aus Fig. 3.

Zu erkennen ist, dass die Leuchtmittelvorrichtung 16 in einem der Längsrichtung nach gebogenen Zustand in der entsprechend geformten Vertiefung 14 angeordnet ist. Wie in den nachfolgenden Figuren gezeigt ist, ist die gezeigte Biegung grundsätzlich nicht auf die Biegerichtung entlang der Längsrichtung der Leuchtmittelanordnung 16 beschränkt.

In Fig. 4 ist zu erkennen, dass die Montageeinrichtung 24 an drei Stellen entlang der Vertiefung 14 vorgesehen ist. So ist in dieser Ausführungsform die Leuchtmittelanordnung 16 an drei Stellen an den Grundkörper 12 fixiert. Die Anzahl von drei Montageeinrichtungen 24 kann je nach Bedarf variieren. So kann im Falle einer nicht gebogenen d.h. geraden Anordnung der Leuchtmittelanordnung 16 auch nur eine einzelne Montageeinrichtung 24 ausreichen. Entsprechend mehr Montageeinrichtungen 24 sind bei einer stärkeren Verbiegung der Leuchtmittelanordnung 16 notwendig. Auch Montageeinrichtungen 24 in länglicher Form entlang der Leuchtmittelanordnung 16 sind denkbar. Wie bereits erwähnt, kann die Leuchtmittelanordnung 16 an der Montageeinrichtung 26 integral oder als separates Bauteil und durch Extrudieren, Spritzgießen, Verkleben, Verrasten, Clipsen, Einkedern oder Verklemmen, oder durch Kombinationen dieser Möglichkeiten, fixiert oder verbunden sein.

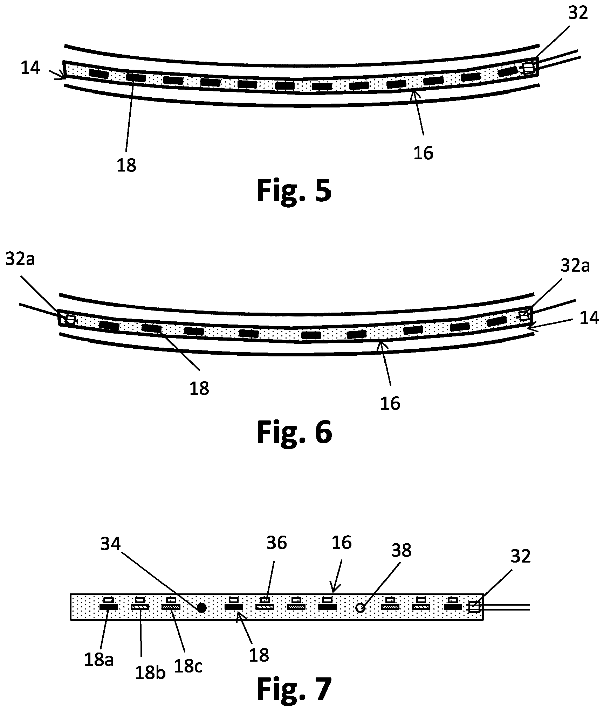

Fig. 5 ist eine schematische Draufsicht einer Ausführungsform einer Leuchtmittelanordnung eines Fahrzeug-Karosseriebauteils.

In der in Fig. 5 gezeigten Ausführungsform der Leuchtmittelanordnung 16 sind sämtliche LEDs 18 der Leuchtmittelanordnung 16 in gleichmäßigen Abständen angeordnet. Damit wird eine besonders homogene Beleuchtung für einen Betrachter von außen erreicht.

Außerdem ist die Leuchtmittelanordnung 16 in dieser Ausführungsform auch entlang seiner Breite gebogen, was zum Beispiel durch eine flexible Ausbildung des Substrats 20, oder durch einen in seiner Dicke stärkeren Substratkörper 20 ermöglicht werden kann. Allgemein kann somit die Leuchtmittelanordnung 16 derart ausgebildet sein, dass die Leuchtmittelanordnung 16 in alle Raumrichtungen biegbar ausgebildet ist.

Fig. 6 ist eine schematische Draufsicht einer weiteren Ausführungsform einer Leuchtmittelanordnung eines Fahrzeug-Karosseriebauteils.

In dieser Ausführungsform sind die LEDs 18 in beliebigen Abständen angeordnet. Dies kann, je nach Bedarf, ebenfalls gewünscht sein. Außerdem sind die Kontaktanschlüsse 32a, 32b an gegenüberliegenden Enden der Leuchtmittelanordnung 16 angeordnet. Dies kann ebenfalls entsprechend den Gegebenheiten des Fahrzeug-Karosserieteils 10 gewünscht sein. Selbstverständlich muss ein Schaltkreis, welcher die LEDs 18 miteinander verschaltet, angepasst werden.

Fig. 7 ist eine schematische Draufsicht einer weiteren Ausführungsform einer Leuchtmittelanordnung eines Fahrzeug-Karosseriebauteils.

In Fig. 7 sind die LEDs 18 in drei verschiedenen Varianten unterschiedlich ausgestaltet. Die LEDs 18 können als weiß oder farbig leuchtende LEDs 18 ausgebildet sein. Auch können, wie in Fig. 7 durch die monochrome Darstellung nur angedeutet, als RGB-LEDs 18a, 18b, 18c ausgebildet sein. Dies ermöglicht je nach gewünschtem visuellem Effekt eine vielseitige farbliche Ausgestaltung der Leuchtmittelanordnung 16. So kann diese Ausgestaltung für ein verbessertes Design genutzt werden, um das Benutzererlebnis zu verbessern. Alternativ kann die farbliche Ausgestaltung für eine Anzeigefunktion, wie beispielsweise einer Anzeige einer Warnung genutzt werden. Auch kann beispielsweise der Ladezustand einer Batterie eines Elektroautos über die Farben der LEDs 18 angezeigt werden.

Die Leuchtmittelanordnung 16 kann neben den LEDs 18 auch weitere elektronische Bauelemente enthalten. So weist die Leuchtmittelanordnung in Fig. 7 einen lichtempfindlichen Sensor 34, eine Zenerdiode 36 und einen Temperatursensor 38 auf. Mit den zusätzlichen elektronischen Bauelementen 34, 36, 38 kann die Funktion der Leuchtmittelanordnung 16 besser gewährleistet und sogar erweitert werden. So kann ein Temperatursensor 38 mit entsprechender Schaltung ermöglichen, dass die LEDs 18 bei einer überhöhten Temperatur aus Sicherheitsgründen automatisch ausgeschaltet werden. Eine antiparallel zu den LEDs 18 geschaltete Zenerdiode 36 kann bewirken, dass bei einem Ausfall einer LED 18 die Funktionsweise einer LED-Reihenschaltung mit den übrigen LEDs 18 aufrechterhalten wird. Ein lichtempfindlicher Sensor 34 kann ein automatisches Ein-/oder Ausschalten der LEDs 18 gemäß eines Umgebungslichtes ermöglichen.

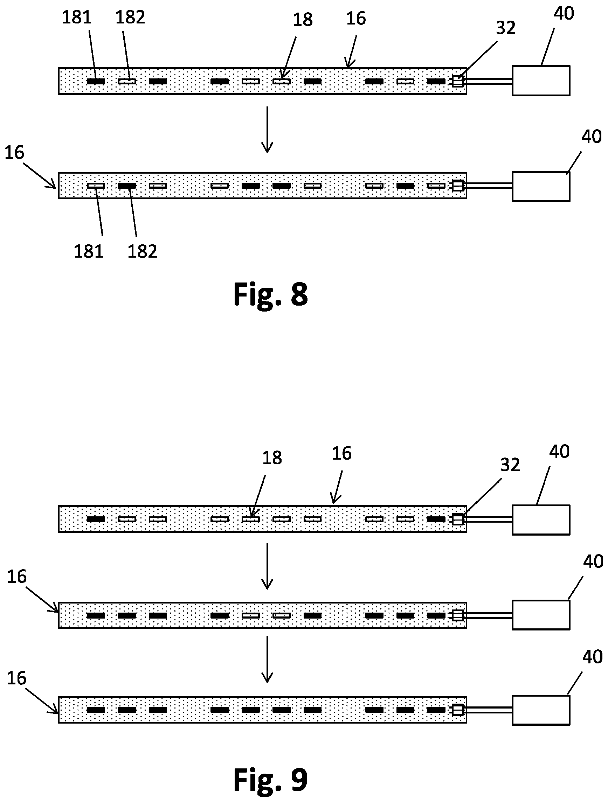

In den folgenden Figuren 8 bis 10 werden Betriebsmodi, hier auch Muster genannt, der Leuchtmittelanordnung 16 vorgestellt, welche mittels einer Steuereinrichtung 40 zur Steuerung der LEDs 18 vorgesehen sind, und derart mit den LEDs 18 gekoppelt sind, dass die LEDs 18 unabhängig voneinander einund ausschaltbar sind. Dabei ist die Steuereinrichtung 40 nicht auf die hier lediglich beispielhaft vorgestellten Muster beschränkt. Vielmehr kann die Steuervorrichtung 40 neben der Steuerung von weiteren Mustern auch dazu ausgelegt sein, dass eine Strahlungsleistung der LEDs 18 durch die Steuereinrichtung 40 unabhängig voneinander steuerbar ist.

Fig. 8 ist eine schematische Draufsicht einer weiteren Ausführungsform einer Leuchtmittelanordnung eines Fahrzeug-Karosseriebauteils und dessen Betriebs.

In dem in Fig. 8 gezeigten Betriebsmodus werden ausgewählte LEDs 18 abwechselnd hintereinander ein- und ausgeschaltet. Zunächst wird eine erste Auswahl 181 von LEDs eingeschaltet, während eine zweite Auswahl 182 von LEDs 18 ausgeschaltet bleibt. Nach einer vorbestimmten Zeitperiode wird die erste Auswahl 181 von LEDs 18 ausgeschaltet, während die zweite Auswahl 182 von LEDs 18 eingeschaltet wird. Die Auswahl der LEDs kann dabei beliebig sein.

Fig. 9 ist eine schematische Draufsicht einer weiteren Ausführungsform eines Betriebs einer Leuchtmittelanordnung.

In dem in Fig. 9 gezeigt Betriebsmodus wird ein Raummuster realisiert. So werden zunächst nur die an der Leuchtmittelanordnung 16 außen platzierten LEDs 18 eingeschaltet, während die übrigen LEDs 18 ausgeschaltet bleiben (oberster Zustand der Fig. 8). Nach einer vorbestimmten Zeitperiode werden dann die jeweils nächst-inneren LEDs 18 an beiden Seiten zusätzlich eingeschaltet, während die übrigen LEDs 18 nicht geschaltet werden (mittlerer Zustand). Schließlich sind in einem Endzustand alle LEDs 18 der Leuchtmittelanordnung 16 eingeschaltet (unterer Zustand). Dieses Muster kann sich, wie auch alle nachfolgenden Muster, zeitlich wiederholen.

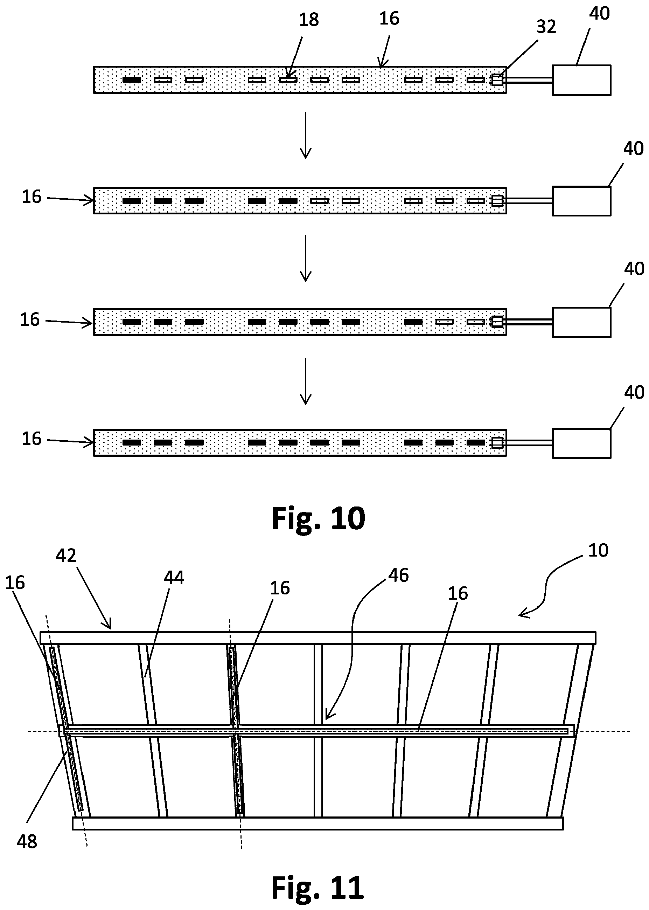

Fig. 10 ist eine schematische Draufsicht einer weiteren Ausführungsform eines Betriebs einer Leuchtmittelanordnung.

In dem in Fig. 10 gezeigten Betriebsmodus der Leuchtmittelanordnung 16 werden die LEDs 18 von der Steuereinrichtung 40 derart geschaltet, so dass eine Richtung angezeigt wird. So ist im oberen Bild lediglich eine der äußeren LEDs 18, auf der Figur die am linken Rand liegende LED 18 eingeschaltet(oberster Zustand in Fig. 10). Nach einer vorbestimmten Zeitperiode wird die nächst-rechte LED eingeschaltet, bis schließlich alle LEDS 18 eingeschaltet sind (unterster Zustand der Figur 10). Dieser Betriebsmodus kann somit beispielsweise als Fahrtrichtungsanzeiger zusätzlich zu den vorhandenen an dem Fahrzeug bereits vorhandenen Richtungsanzeigern genutzt werden, was die Verkehrssicherheit erhöht.

Fig. 11 ist eine schematische Darstellung einer Ausführungsform eines Fahrzeug-Karosseriebauteils.

In Fig. 11 ist ein als Kühlergrill 42 ausgebildetes Fahrzeug-Karosseriebauteil 10 gezeigt. Die gestrichelten Linien deuten an, an welchen Stellen des Kühlergrills 42 es denkbar ist, Leuchtmittelanordnung 16 anzuordnen. So kann die Leuchtmittelanordnung 16 an einer Rippe 44 eines Gitters 46 des Kühlergrills 42, oder einer Seitenwand des Kühlergrills 42 angeordnet werden. Bevorzugt wird die Leuchtmittelanordnung 16 dabei in eine an den genannten Stellen des Kühlergrills 44 ausgebildeten Vertiefung 14 aufgenommen. Die in der Vertiefung 14 aufgenommene Leuchtmittelanordnung 16 ist vorzugsweise durch eine Abdeckung 26 mit teil-transparenten Abschnitt 28 verdeckt. So kann mit der Aufnahme in der Vertiefung 14 und der damit verbundenen Integration der Leuchtmittelanordnung 16 beispielsweise in eine Rippe 44 des Kühlergrills 42 eine von außen betrachtet besonders gut sichtbare Beleuchtung erreicht werden. Alternativ oder zusätzlich kann die Leuchtmittelanordnung 16 an zumindest einer Seitenwand 48 des Kühlergrills 42 angeordnet sein. Mit einer Anordnung der Leuchtmittelanordnung 16 an eine Seitenwand 48 des Kühlergrills 42 kann eine besonders effektive Ausleuchtung 16 der Kühlergrillstruktur erreicht werden.

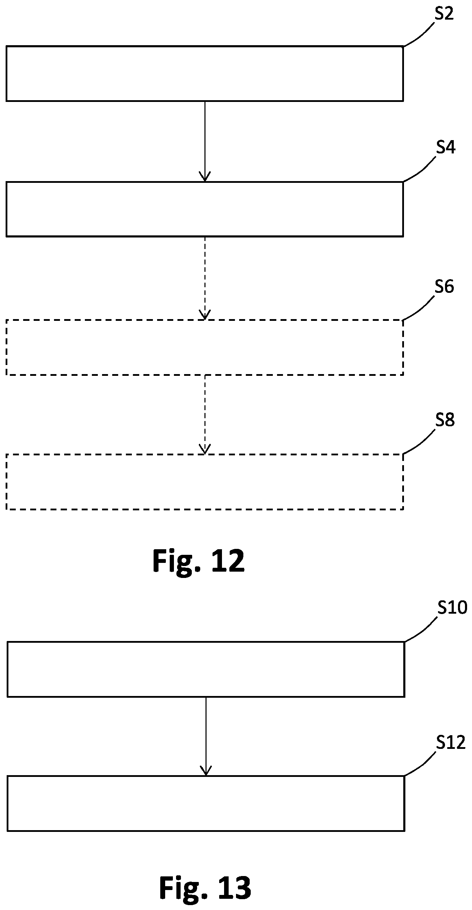

Fig. 12 ist eine schematische Darstellung einer Ausführungsform eines Verfahrens zur Herstellung eines Fahrzeug-Karosseriebauteils.

Das in Fig. 12 gezeigte Verfahren zur Herstellung eines Karosseriebauteils 10 enthält den Schritt des Bereitstellens (S2) eines Grundkörpers 12, welcher zur Aufnahme einer Leuchtmittelanordnung 16 ausgebildet ist. In einem nächsten Schritt wird ein Befestigen S4 einer als ein zumindest in seiner Längsrichtung biegbarer LED-Streifen ausgebildeten Leuchtmittelanordnung 16, welche eine Vielzahl von nacheinander angeordneten und elektrisch verschalteten LEDs 18 aufweist, in den Grundkörpers 12 ausgeführt. Danach folgt der optionale Schritt eines Befestigens S6 einer Abdeckung 26 zum Abdecken der Vertiefung 14 in dem Grundkörper 12, wobei die Abdeckung mindestens einen zumindest teil-transparenten Abschnitt 28 aufweist. Schließlich wird der optionale Schritt eines Einschalten S8 der Beleuchtungseinrichtung 16 ausgeführt, wobei von den LEDs 18 der Leuchtmittelanordnung 16 abgegebenes Licht durch den zumindest teil-transparenten Abschnitt 28 nach außen abgestrahlt wird.

Fig. 13 ist eine schematische Darstellung einer Ausführungsform eines Verfahrens zur Steuerung einer Leuchtmittelanordnung eines Karosseriebauteils.

Das in Fig. 13 gezeigte Verfahren zur Steuerung einer Leuchtmittelanordnung 16 an einem Fahrzeug enthält den Schritt des Bereitstellens S10 einer Steuereinrichtung 40 zum Steuern einer Vielzahl von nacheinander angeordneten und elektrisch verschalteten LEDs 18 an einem Grundkörpers 12 eines Karosseriebauteils 10, insbesondere eines Kühlergrills 42, befestigten und als ein zumindest in seiner Längsrichtung biegbarer LED-Streifen ausgebildeten Leuchtmittelanordnung 16. Der nächste Schritt umfasst ein Ein- und Ausschalten S12, oder ein Modulieren einer Strahlungsleistung, der einzelnen LEDs 18 gemäß einem vorbestimmten Muster.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### Bezugszeichenliste

- 10: Fahrzeug-Karosseriebauteil
- 11: Oberfläche des Grundkörpers
- 12: Grundkörper
- 13: Lichtaustrittsseite
- 14: Vertiefung
- 15: Wand der Vertiefung
- 16: Leuchtmittelanordnung
- 17: Vorderseite der Leuchtmittelanordnung
- 18, 18a, 18b, 18c: LED
- 20: Substrat
- 22: Außenschicht
- 24: Montageeinrichtung
- 26: Abdeckung
- 27: äußere Oberfläche der Abdeckung
- 28: teil-transparenter Abschnitt der Abdeckung
- 30: opaker Abschnitt der Abdeckung
- 32, 32a, 32b: Kontaktanschlüsse
- 34: lichtempfindlicher Sensor
- 36: Zenerdiode
- 38: Temperatursensor
- 40: Steuereinrichtung
- 42: Kühlergrill
- 44: Rippe
- 46: Gitter
- 48: Seitenwand des Kühlergrills
- 181: erste Auswahl von LEDs
- 182: zweite Auswahl von LEDs
- S1 - S12: Verfahrensschritte

## Patentansprüche

1. Fahrzeug-Karosseriebauteil (10),
mit einer Leuchtmittelanordnung (16), welche als ein zumindest in seiner Längsrichtung biegbarer LED-Streifen ausgebildet ist, welche eine Vielzahl von nacheinander angeordneten und elektrisch verschalteten LEDs (18) aufweist; und
mit einem Grundkörper (12), welcher zur Aufnahme der Leuchtmittelanordnung (16) an einer Lichtaustrittsseite (13) ausgebildet ist.

2. Fahrzeug-Karosseriebauteil nach Anspruch 1,
**dadurch gekennzeichnet,**
**dass** das Fahrzeug-Karosseriebauteil (10) eine Montageeinrichtung (24) umfasst, welche zum Fixieren der Leuchtmittelanordnung (16) ausgelegt ist.

3. Fahrzeug-Karosseriebauteil nach Anspruch 1 oder 2,
**dadurch gekennzeichnet,**
**dass** der Grundkörper (12) an der Lichtaustrittsseite (13) zumindest eine Vertiefung (14) zur Aufnahme der Leuchtmittelanordnung (16) aufweist.

4. Fahrzeug-Karosseriebauteil nach Anspruch 3,
**dadurch gekennzeichnet,**
**dass** das Fahrzeug-Karosseriebauteil (10) eine Abdeckung (26) zum Abdecken der Vertiefung (14) an der Lichtaustrittsseite (13) umfasst, wobei die Abdeckung (26) mindestens einen zumindest teil-transparenten Abschnitt (28) aufweist, durch welchen zumindest ein Teil des von den LEDs (18) erzeugten Lichts nach außen abstrahlbar ist.

5. Fahrzeug-Karosseriebauteil nach einem der vorherigen Ansprüche,
**dadurch gekennzeichnet,**
**dass** die Leuchtmittelanordnung (16) ein Substrat (20) und eine zumindest teil-transparente Außenschicht (22) aufweist, wobei die LEDs (18) zwischen dem Substrat (20) und der Außenschicht (22) angeordnet sind.

6. Fahrzeug-Karosseriebauteil nach einem der vorherigen Ansprüche,
**dadurch gekennzeichnet,**
**dass** die Leuchtmittelanordnung (16) in alle Raumrichtungen biegbar ausgebildet ist, und/oder
**dass** die LEDs (18) als weiß oder einfarbig leuchtende LEDs (18) oder als RGB-LEDs (18a, 18b, 18c) ausgebildet sind, und/oder
**dass** die LEDs (18) ausschließlich auf einer Vorderseite (17) der Leuchtmittelanordnung (16) angeordnet sind.

7. Fahrzeug-Karosseriebauteil nach einem der vorherigen Ansprüche,
**dadurch gekennzeichnet,**
**dass** mindestens zwei Kontaktanschlüsse (32, 32a, 32b) zur elektrischen Kontaktierung der LEDs (18) auf der Vorderseite (17) der Leuchtmittelanordnung (16) angeordnet sind, und dass die jeweiligen Kontaktanschlüsse (32, 32a, 32b) insbesondere an einem gegenüberliegenden oder gleichen Ende der Leuchtmittelanordnung (16) angeordnet sind.

8. Fahrzeug-Karosseriebauteil nach einem der vorherigen Ansprüche,
**dadurch gekennzeichnet,**
**dass** die Leuchtmittelanordnung (16) zumindest drei LEDs (18) aufweist, welche in gleichen Abständen hintereinander auf dem LED-Streifen angeordnet sind, und oder
**dass** die Leuchtmittelanordnung (16) einen lichtempfindlichen Sensor (34), eine Zenerdiode (36) oder einen Temperatursensor (38) aufweist.

9. Fahrzeug-Karosseriebauteil nach einem der vorherigen Ansprüche,
**dadurch gekennzeichnet,**
**dass** eine Steuereinrichtung (40) zur Steuerung der LEDs (18) vorgesehen ist, die derart mit den LEDs (18) gekoppelt ist, dass die LEDs (18) unabhängig voneinander ein- und ausschaltbar sind, und
**dass** eine Strahlungsleistung der LEDs (18) insbesondere durch die Steuereinrichtung (40) unabhängig voneinander steuerbar ist.

10. Fahrzeug-Karosseriebauteil nach Anspruch 2,
**dadurch gekennzeichnet,**
**dass** die Leuchtmittelanordnung (16) an der Montageeinrichtung (24) integral fixiert ist, und/oder
**dass** der Grundkörper (12) und die Abdeckung (26) einteilig oder einstückig ausgebildet sind, und/oder
**dass** die Leuchtmittelanordnung (16) an der Montageeinrichtung (24) als separates Bauteil fixiert ist.

11. Fahrzeug-Karosseriebauteil nach Anspruch 4,
**dadurch gekennzeichnet,**
**dass** eine äußere Oberfläche (27) der Abdeckung (26) an der Lichtaustrittsseite (13) bündig zu einer die Vertiefung (14) umgebenden Oberfläche (11) des Grundkörpers (12) ausgebildet ist, und/oder
**dass** die Leuchtmittelanordnung (16) an der Montageeinrichtung (24) durch zumindest einer der folgenden Möglichkeiten fixiert ist: Extrudieren, Spritzgießen, Verkleben, Verrasten, Clipsen, Einkedern, Verklemmen, und/oder dass der mindestens eine zumindest teil-transparente Abschnitt (28) der Abdeckung (26) eine Transmission eines vorbestimmten spektralen Bereichs oder einer vorbestimmten Farbe aufweist, und/oder
**dass** der mindestens eine zumindest teil-transparente Abschnitt (28) der Abdeckung (26) als eine Linse ausgebildet ist.

12. Fahrzeug-Karosseriebauteil nach einem der vorherigen Ansprüche,
**dadurch gekennzeichnet,**
**dass** das Fahrzeug-Karosseriebauteil (10) als Kühlergrill (42) ausgebildet ist, und dass die Leuchtmittelanordnung (16) an einer Rippe (44) eines Gitters (46) des Kühlergrills (42), oder an zumindest einer Seitenwand (48) des Kühlergrills (42) befestigt ist.

13. Verfahren zur Herstellung eines Fahrzeug-Karosseriebauteils (10), insbesondere eines Fahrzeug-Karosseriebauteils (10) nach einem der Ansprüche 1 bis 12, mit den Schritten:
Bereitstellen (S2) eines Grundkörpers (12), welcher an einer Lichtaustrittsseite (13) zur Aufnahme der Leuchtmittelanordnung (16) ausgebildet ist;
Befestigen (S4) einer als ein zumindest in seiner Längsrichtung biegbarer LED-Streifen ausgebildeten Leuchtmittelanordnung (16), welche eine Vielzahl von nacheinander angeordneten und elektrisch verschalteten LEDs (18) aufweist, an den Grundkörper (12).

14. Verfahren nach Anspruch 13,
**gekennzeichnet durch** den zusätzlichen Schritt: Befestigens (S6) einer Abdeckung (26) zum Abdecken einer zur Aufnahme der Leuchtmittelvorrichtung (16) vorgesehenen Vertiefung (14) des Grundkörpers (12), wobei die Abdeckung (26) mindestens einen zumindest teil-transparenten Abschnitt (28) aufweist.

15. Verfahren zur Steuerung einer Leuchtmittelanordnung (16) an einem Fahrzeug, welches insbesondere ein Fahrzeug-Karosseriebauteils (10) nach einem der Ansprüche 1 bis 12 aufweist, mit den Schritten:
Bereitstellen (S10) einer Steuereinrichtung (40) zum Steuern einer Vielzahl von nacheinander angeordneten und elektrisch verschalteten LEDs (18) an einem Grundkörper (12) eines Fahrzeug-Karosseriebauteils (10) angeordneten und als ein zumindest in seiner Längsrichtung biegbarer LED-Streifen ausgebildeten Leuchtmittelanordnung (16); und
Ein- und Ausschalten (S12) oder Modulieren einer Strahlungsleistung, der einzelnen LEDs (18) gemäß einem vorbestimmten Muster.
